# EUROPEAN PATENT SPECIFICATION

(11) **EP 4 131 928 B1**
(45) Date of publication and mention of the grant of the patent: **07.05.2025**
(21) Application number: 21797849.3
(22) Date of filing: 31.03.2021
(51) Int. Cl.: H04N 5/272, H04N 23/958, H04N 23/951, H04N 23/667, H04N 23/741, H04N 25/46

(54) **PHOTOGRAPHING METHOD, TERMINAL DEVICE, PROGRAM AND STORAGE MEDIUM**
FOTOGRAFIEVERFAHREN, ENDGERÄTEVORRICHTUNG, PROGRAMM UND SPEICHERMEDIUM
PROCÉDÉ ET APPAREIL DE PHOTOGRAPHIE, DISPOSITIF TERMINAL, PROGRAMME ET SUPPORT DE STOCKAGE

(30) Priority: 28.04.2020 CN 202010351795
(43) Date of publication of application: 08.02.2023
(73) Proprietor: Huawei Technologies Co., Ltd., Shenzhen, Guangdong 518129, (CN)
(72) Inventor: YUAN, Jiangfeng, Shenzhen, Guangdong 518129 (CN); ZHANG, Yu, Shenzhen, Guangdong 518129 (CN)
(74) Representative: Goddar, Heinz J.
(86) International application number: PCT/CN2021/084469
(87) International publication number: WO 2021/218551

(56) References cited:
- WO-A1-2018/137267
- WO-A1-2018/137267
- CN-A- 102 090 068
- CN-A- 108 881 730
- CN-A- 110 944 160
- CN-A- 110 944 160
- US-A1- 2007 147 820
- US-A1- 2012 257 079

## Description

### TECHNICAL FIELD

This application pertains to the field of terminal technologies, and in particular, to a photographing method and apparatus, a terminal device, and a storage medium.

### BACKGROUND

With continuous development of photographing technologies and widespread popularity of terminal devices, a photographing function of the terminal device is widely used, and increasingly more users may perform photographing by using a terminal device such as a mobile phone and a tablet computer. This greatly improves photographing convenience.

In a conventional technology, the terminal device may implement the photographing function by using a camera that is disposed in the terminal device and that has a short focus distance. For example, the terminal device may implement the photographing function by enabling the fixed-focus camera to work in a Remosaic mode or a binning mode (namely, a mode used to combine adjacent pixels with a same color into one pixel). Depth of field in the Remosaic mode is shallow, and although foreground definition of a photographed image is high, there is a problem that background definition is low. Depth of field in the binning mode is deep, and although background definition of a photographed image is high, there is a problem that foreground definition is low.
CN 110 944 160 A discloses an image processing method and electronic equipment, which are applied to the field of communication and are used for solving the problem that the quality of an image obtained by the electronic equipment through an image sensor is poorer. The method comprises the following steps: in a first working mode, acquiring first original data through an image sensor to obtain a first image; in a second working mode, collecting second original data through the image sensor to obtain a second image, wherein, the resolution of the first image is different from that of the second image; and fusing the first image and the second image to obtain a target image with a higher signal-to-noise ratio. The method is specifically applied to the image processing process based on the image sensor.
US 2007/147820 A1 discloses a digital image acquisition system having no photographic film that comprises an apparatus for capturing digital images and a flash unit for providing illumination during image capture. The system has a portrait mode for generating an image of a foreground object against a blurred background, the portrait mode being operable to capture first, second and third images (A, B and C) of nominally the same scene. One of the first and second images (A, B) is taken with flash and the other is taken without flash, and the third image (C) is blurred compared to the first and second images. The portrait mode is further operable to determine foreground and background regions of the scene using the first and second images (A, B), and to substitute the blurred background of the third image (C) for the background of an in-focus image of the scene. In one example the in-focus image is one of the first and second images.
WO 2018/137267 A1 discloses an image processing method and a terminal apparatus. The method comprises: acquiring at least one first image and at least one second image alternatingly and consecutively outputted by a camera sensor, wherein the resolution of the first image is the same as the resolution corresponding to a current photographing mode, and the resolution of the first image is N times of the resolution of the second image, where N is an integer greater than 1; the camera sensor adopting a first exposure parameter to output each first image, and adopting a second exposure parameter to output each second image, where the first exposure parameter is greater than the second exposure parameter; and performing image fusion based on the at least one first image and the at least one second image to obtain a fused image with an increased dynamic range.

### SUMMARY

Embodiments of this application provide a photographing method, a terminal device, a computer program product and a storage medium, to resolve a conventional-technology problem that an image photographed by a fixed-focus camera with a short focus distance has low background definition or low foreground definition.

According to a first aspect, an embodiment of this application provides a photographing method of claim 1

In the foregoing photographing method, during photographing, the fixed-focus camera of a terminal device is controlled to alternate between different working modes. For example, the fixed-focus camera may be controlled to alternate between a Remosaic mode and a binning mode, or the fixed-focus camera may be controlled to alternate between a binning mode used to combine four pixels with a same color into one pixel and a binning mode used to combine nine pixels with a same color into one pixel, to obtain the first image and the second image. In addition, the fixed-focus camera sends the first image and the second image to a processor of the terminal device. The first image and the second image include a same photographing scene, and the resolution of the first image is N times the resolution of the second image. Therefore, foreground definition of the first image is higher than foreground definition of the second image, and background definition of the second image is higher than background definition of the first image. The processor performs image fusion processing on the first image and the second image, to fuse the high-definition foreground of the first image into the second image whose background definition is high, so as to obtain the photographed image whose foreground definition and background definition are both high. This improves an image photographing effect, and improves user experience.

In a possible implementation, the obtaining a first image and a second image that are output by a fixed-focus camera includes:
obtaining a preview image output by the fixed-focus camera, and detecting whether a predetermined target exists in the preview image; and
when a predetermined target exists in the preview image, obtaining the first image and the second image that are output by the fixed-focus camera.

In the photographing method provided in this possible implementation, the terminal device controls, only in a photographing scene in which the predetermined target such as a person or an animal exists, the fixed-focus camera to alternate between different working modes, to obtain the first image and the second image that correspond to different modes, so as to perform image fusion processing. This can reduce photographing time in a photographing scene in which no predetermined target exists, and improve a photographing speed.

In a possible implementation, when the obtained first image and the obtained second image each are one frame, the performing image fusion processing on foreground of the first image and background of the second image to obtain a photographed image includes:
obtaining the predetermined target by segmenting the first image, and fusing, into a location of the predetermined target in the second image, the predetermined target obtained through segmentation, to obtain the photographed image.

In the photographing method provided in this possible implementation, the terminal device may obtain the predetermined target by segmenting the first image by using an image segmentation technology, and may fuse, into the location corresponding to the predetermined target in the second image, the predetermined target obtained through segmentation, to obtain the photographed image. Specifically, the terminal device may separately obtain a first predetermined target by segmenting the first image by using the image segmentation technology and obtain a second predetermined target by segmenting the second image by using the image segmentation technology. The first predetermined target and the second predetermined target are a same target in different images. In addition, the terminal device may obtain a location of the second predetermined target in the second image. Then, the terminal device may fuse, into the location in the second image, the first predetermined target obtained through segmentation, to obtain the photographed image.

In another possible implementation, when the obtained first image and the obtained second image each are at least two frames, the performing image fusion processing on foreground of the first image and background of the second image to obtain a photographed image includes:
performing image fusion processing on the at least two frames of first images to obtain a third image, and performing image fusion processing on the at least two frames of second images to obtain a fourth image; and
obtaining the predetermined target by segmenting the third image, and fusing, into a location of the predetermined target in the fourth image, the predetermined target obtained through segmentation, to obtain the photographed image.

In the photographing method provided in this possible implementation, when the first image and the second image each include a plurality of frames, the terminal device may first perform image fusion processing on the plurality of frames of first images by using a high dynamic range (High Dynamic Range, HDR) algorithm to obtain the third image corresponding to the plurality of frames of first images, and perform image fusion processing on the plurality of frames of second images by using the HDR algorithm to obtain the fourth image corresponding to the plurality of frames of second images. Both the third image and the fourth image are HDR images. Then, the terminal device may perform segmentation and fusion processing on the third image and the fourth image to obtain the photographed image. Herein, image fusion processing is separately performed on the plurality of frames of first images and the plurality of frames of second images by using the HDR algorithm, so that the obtained third image and the obtained fourth image have more dynamic ranges and image details. Therefore, the photographed image obtained through fusion based on the third image and the fourth image has higher definition. This improves an image photographing effect, and improves user experience.

For example, when the first image and the second image each include a plurality of frames, the terminal device may first obtain one frame of first image with highest foreground definition in the plurality of frames of first images, and may obtain one frame of second image with highest background definition in the plurality of frames of second images. Then, the terminal device may perform segmentation and fusion processing on the frame of first image with the highest foreground definition and the frame of second image with the highest background definition to obtain the photographed image finally output by the terminal device. Herein, the terminal device performs segmentation and fusion by selecting the first image with the highest foreground definition and the second image with the highest background definition. This can ensure that both foreground definition and background definition of the photographed image obtained through fusion are high, and improve user experience.

In another possible implementation, when the obtained first image is one frame, and the obtained second image is at least two frames, the performing image fusion processing on foreground of the first image and background of the second image to obtain a photographed image includes:
performing image fusion processing on the at least two frames of second images to obtain a fourth image, obtaining the predetermined target by segmenting the first image, and fusing, into a location of the predetermined target in the fourth image, the predetermined target obtained through segmentation, to obtain the photographed image; or
when the obtained first image is at least two frames, and the obtained second image is one frame, the performing image fusion processing on foreground of the first image and background of the second image to obtain a photographed image includes:
   performing image fusion processing on the at least two frames of first images to obtain a third image, obtaining the predetermined target by segmenting the third image, and fusing, into a location of the predetermined target in the second image, the predetermined target obtained through segmentation, to obtain the photographed image.

For example, the third image and the fourth image are high dynamic range HDR images.

It should be noted that, before the performing image fusion processing on foreground of the first image and background of the second image, the method includes:
enlarging a size of the second image to a size of the first image based on the resolution of the first image and the resolution of the second image.

It should be noted that, because the resolution of the first image is N times the resolution of the second image, the size of the first image is also N times the size of the first image. For example, when the first image is a full-size image, and the second image is an image corresponding to the binning mode used to combine four pixels with a same color into one pixel, the resolution of the first image is four times the resolution of the second image, and therefore the size of the second image is one quarter of the size of the first image. In other words, in this embodiment of this application, the size of the second image is different from the size of the first image. To perform image fusion processing on the first image and the second image, after obtaining the first image and the second image, the terminal device may first enlarge the size of the second image to the size of the first image based on the resolution of the first image and the resolution of the second image, then may obtain the predetermined target by segmenting the first image by using the image segmentation technology, and may fuse, into the enlarged second image, the predetermined target obtained through segmentation. The enlarging operation on the second image and the segmentation operation on the predetermined target may be performed simultaneously. For example, the terminal device may simultaneously perform the enlarging operation on the second image and the segmentation operation on the predetermined target in a multi-thread parallel manner, to improve an image processing speed, improve a photographing speed, and improve user experience.

An embodiment of this application provides a photographing method of claim 2.

In the foregoing photographing method, a terminal device may obtain the first image and the second image by performing conversion processing on one frame of Remosaic original color-block image output by the fixed-focus camera. Then, the terminal device may perform segmentation and fusion on the first image and the second image to obtain the photographed image finally output by the terminal device. Both foreground definition and background definition of the obtained photographed image are high. In addition, because there is no foreground change problem between the first image and the second image, there may be no gap in a fusion part obtained after the first image and the second image are fused. In this way, interpolation processing can be prevented from being performed on the fusion part, or the terminal device can be prevented from performing secondary fusion processing on the first image and the second image. This greatly improves a photographing speed and a photographing effect of the terminal device, and improves user experience. In addition, in the photographing method, because the fixed-focus camera needs to obtain only one frame of Remosaic original color-block image, the fixed-focus camera does not need to be switched back and forth between different working modes. Therefore, time and power consumed by performing mode switching by the fixed-focus camera can be greatly reduced, and a speed of obtaining the first image and the second image by the terminal device can be improved. This further improves photographing efficiency of the terminal device, and improves user experience.

In a possible implementation, the obtaining a Remosaic original color-block image output by a fixed-focus camera includes:
obtaining a preview image output by the fixed-focus camera, and detecting whether a predetermined target exists in the preview image; and
when a predetermined target exists in the preview image, obtaining the Remosaic original color-block image output by the fixed-focus camera.

According to a second aspect, an embodiment of this application provides a terminal device of claim 12, including a memory, a processor, and a computer program that is stored in the memory and that can be run on the processor. When the processor executes the computer program, the terminal device is enabled to implement the photographing method in any one of the implementations of the first aspect.

According to a third aspect, an embodiment of this application provides a computer-readable storage medium of claim 13. The computer-readable storage medium stores a computer program. When the computer program is executed by a computer, the computer is enabled to implement the photographing method in any one of the implementations of the first aspect or the second aspect.

According to a forth aspect, an embodiment of this application provides a computer program product of claim 14. When the computer program product runs on a terminal device, the terminal device is enabled to perform the photographing method in any one of the implementations of the first aspect or the second aspect.

### BRIEF DESCRIPTION OF DRAWINGS

FIG. 1 is a schematic diagram in which a camera is a front-facing camera of a terminal device;
FIG. 2 is a schematic diagram of depth of field;
FIG. 3a is a schematic diagram of a pixel structure corresponding to a Remosaic mode;
FIG. 3b is a schematic diagram of a pixel structure corresponding to a binning mode;
FIG. 4a and FIG. 4b are schematic diagrams of enabling a clear photographing mode on a terminal device;
FIG. 5 shows a first image that is obtained by a terminal device and that corresponds to a Remosaic mode;
FIG. 6 shows a second image that is obtained by a terminal device and that corresponds to a binning mode;
FIG. 7 shows a photographed image obtained by a terminal device by fusing FIG. 5 and FIG. 6;
FIG. 8 shows a Remosaic original color-block image output by a camera;
FIG. 9 is a schematic diagram of converting, for output, the Remosaic original color-block image in FIG. 8 into pixels arranged in a Bayer array;
FIG. 10 is a schematic diagram of converting the Remosaic original color-block image in FIG. 8 into a combined pixel for output;
FIG. 11 is a schematic flowchart of a photographing method according to an embodiment of this application;
FIG. 12 is a schematic flowchart of a photographing method according to another embodiment of this application;
FIG. 13 is a schematic diagram of a structure of a terminal device according to an embodiment of this application; and
FIG. 14 is a schematic diagram of a structure of a mobile phone to which a photographing method is applicable according to an embodiment of this application.

### DESCRIPTION OF EMBODIMENTS

It should be understood that, during use in the specification of this application, the term "include" indicates existence of a described feature, entirety, step, operation, element, and/or component, but does not rule out existence or addition of one or more other features, entireties, steps, operations, elements, components, and/or sets thereof.

It should be further understood that the term "and/or" used in the specification of this application indicates any and all possible combinations of one or more associated listed items, and includes these combinations.

As used in the specification of this application, the term "if" may be interpreted as "when", "once", "in response to determining", or "in response to detecting" based on the context. Similarly, based on the context, the phrase "if it is determined that" or "if (a described condition or event) is detected" may be interpreted as "once it is determined that", "in response to determining", "once (a described condition or event) is detected", or "in response to detecting (a described condition or event)".

In addition, in the descriptions of the specification of this application, the terms "first", "second", "third", and the like are merely used to distinguish between descriptions, and cannot be understood as an indication or implication of relative importance.

Based on "an embodiment", "some embodiments", or the like" described in the specification of this application means that one or more embodiments of this application include a specific feature, structure, or characteristic described based on the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

A photographing method provided in embodiments of this application may be applied to a terminal device such as a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in the embodiments of this application.

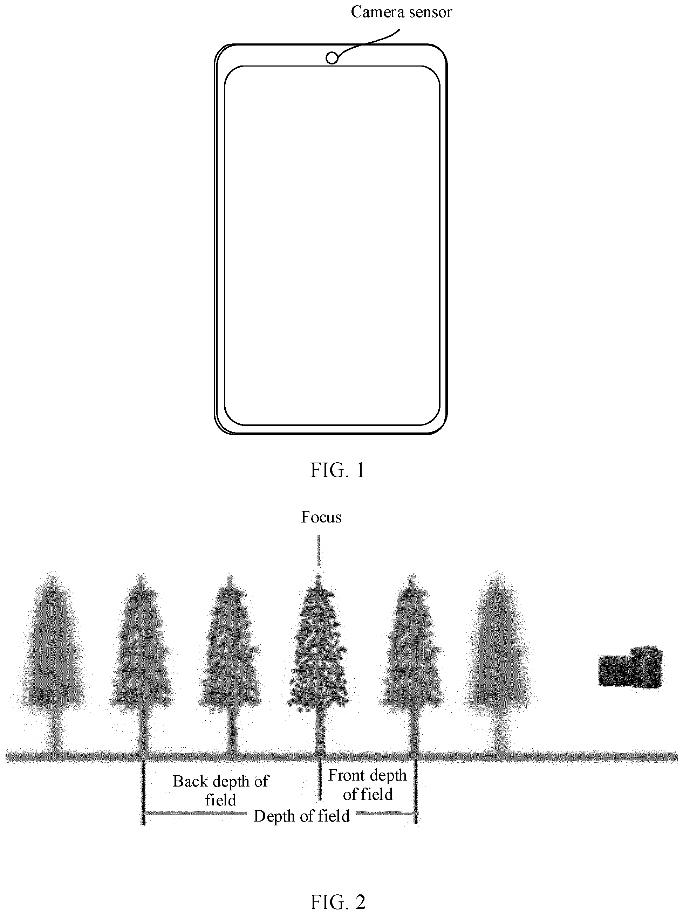

In a conventional technology, the terminal device may implement a photographing function by using a camera disposed in the terminal device. The camera may be a front-facing camera of the terminal device, or may be a rear-facing camera of the terminal device. FIG. 1 is a schematic diagram in which a camera is a front-facing camera of a terminal device. The following is also described by using an example in which the camera is the front-facing camera of the terminal device.

The front-facing camera of the terminal device is generally applicable to a short-distance photographing scene such as a selfie scene. Therefore, a fixed-focus camera with a short focus distance is generally used as the front-facing camera of the terminal device. For example, a fixed-focus camera with a focus distance of 30 cm to 50 cm (which is generally a selfie distance of a user) may be used. The fixed-focus camera is a camera with only one fixed focal length. The focus distance is a distance from a focus point to the camera. The focus point is a location of a photographed object when the photographed object is most clearly photographed.

Based on the principles of optics and a capability of the human eye to identify clarity, the fixed-focus camera generally has a clear range that is generally referred to as depth of field. An object located inside the depth of field may be clearly presented in an image obtained by the camera, and an object located outside the depth of field is blurry presented in the image obtained by the camera. As shown in FIG. 2, the depth of field may generally include back depth of field located behind the focus point and front depth of field located in front of the focus point. Herein, the front and the back of the focus point are determined by using a direction in which the focus point faces the camera.

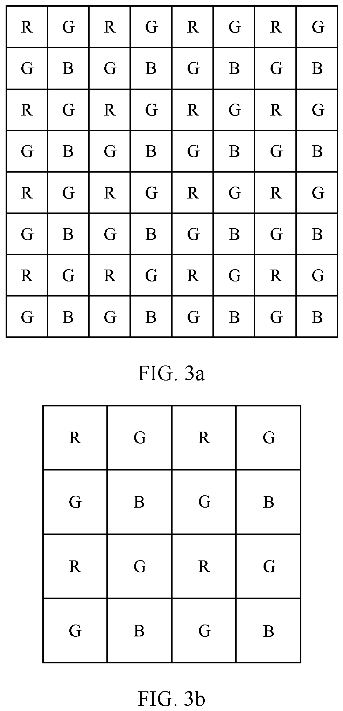

When light is good, and sufficient exposure may be implemented by using a single pixel, the terminal device may obtain a high-pixel image by enabling the fixed-focus camera to work in a Remosaic (Remosaic) mode shown in FIG. 3a, so as to ensure resolution of the image. When light is dim, the terminal device may enable the fixed-focus camera to work in a binning mode, to expand a photosensitive area of a pixel and increase an amount of admitted light of the pixel by combining a plurality of pixels with a same color into one pixel, so as to obtain a high-brightness and low-noise image. Herein, the plurality of pixels combined in the binning mode may be n2 pixels, where n is an integer greater than or equal to 2.

For example, as shown in FIG. 3b, when n is 2, the binning mode is a mode used to combine four pixels with a same color into one pixel. When n is 3, the binning mode is a mode used to combine nine pixels with a same color into one pixel. When n is 4, the binning mode is a mode used to combine sixteen pixels with a same color into one pixel.

In the conventional technology, the front depth of field of the fixed-focus camera is ΔL1=F*δ*L²/(f²+F*δ*L), the back depth of field thereof is ΔL2=F*δ*L²/(f²-F*δ*L), and the depth of field thereof is ΔL=ΔL1+ΔL2=(2f²*F*δ*L²)/(f⁴-F²*δ²*L²). F is an aperture of the fixed-focus camera, δ is a diameter of a permissible circle of confusion, f is a focal length, and L is a photographing distance (focus distance + focal length).

It may be learned from the foregoing depth-of-field formula that, when the focal length, the focus distance, and the aperture remain unchanged, the depth of field of the fixed-focus camera depends on the diameter of the permissible circle of confusion, and the diameter of the permissible circle of confusion depends on a size of a single pixel in a current working mode of the fixed-focus camera. Specifically, the diameter of the permissible circle of confusion is approximately sizes of four single pixels in each working mode. Herein, because the size of the single pixel in the binning mode is four times the size of the single pixel in the Remosaic mode, the depth of field in the binning mode (including the front depth of field and the back depth of field) is greater than the depth of field in the Remosaic mode.

For example, when the focal length f of the fixed-focus camera is 3.5 mm, the photographing distance L thereof is 40 cm, the aperture F thereof is 2.0, and a size of an original pixel (the size of the original pixel is the size of the single pixel in the Remosaic mode, namely, one quarter of the size of the single pixel in the binning mode) is 1.0 µm, it may be learned through calculation based on the foregoing depth-of-field formula that the front depth of field in the Remosaic mode is 83 mm and the back depth of field in the Remosaic mode is 141 mm, and the front depth of field in the binning mode is 137 mm, and the back depth of field in the binning mode is 438 mm.

In conclusion, it may be learned that the depth of field in the Remosaic mode is shallow, and although an image obtained when the fixed-focus camera works in the Remosaic mode has high foreground definition, there is a problem that background (also referred to as a background) definition is low; and the depth of field in the binning mode is deep, and although an image obtained when the fixed-focus camera works in the binning mode has high background definition, there is a problem that foreground definition is low.

To resolve the foregoing problem, the embodiments of this application provide a photographing method and apparatus, a terminal device, and a computer-readable storage medium. During photographing, a first image corresponding to a Remosaic mode and a second image corresponding to a binning mode may be obtained, and foreground of the first image and background of the second image are fused to obtain a photographed image whose foreground definition and background definition are both high.

### Embodiment 1

The photographing method provided in this embodiment may be applied to a terminal device, and the terminal device includes a fixed-focus camera, a processor, and a display. In a same photographing scene, the fixed-focus camera alternates between a Remosaic mode and a binning mode to obtain a first image corresponding to the Remosaic mode and a second image corresponding to the binning mode, and sends the first image and the second image to the processor. The first image and the second image include a current same photographing scene. The processor fuses the first image and the second image to obtain a final photographed image, and may display the final photographed image on the display.

It should be noted that, in this embodiment, that the fixed-focus camera alternates between the Remosaic mode and the binning mode to obtain the first image corresponding to the Remosaic mode and the second image corresponding to the binning mode. In this embodiment, the fixed-focus camera alternatively alternates between different binning modes. For example, the fixed-focus camera may alternate between a binning mode (namely, a four-in-one mode) used to combine four pixels with a same color into one pixel and a binning mode (namely, a nine-in-one mode) used to combine nine pixels with a same color into one pixel, to obtain a first image corresponding to the four-in-one mode and a second image corresponding to the nine-in-one mode, and fuses foreground of the first image corresponding to the four-in-one mode and background of the second image corresponding to the nine-in-one mode to obtain a photographed image whose foreground definition and background definition are both high.

The following is described by using an example in which the first image is an image corresponding to the Remosaic mode and the second image is an image corresponding to the binning mode used to combine four pixels with a same color into one pixel.

For example, a sequence that the fixed-focus camera alternates between the Remosaic mode and the binning mode may be the following alternating sequence: First, the fixed-focus camera works in the Remosaic mode to obtain one frame of first image; next, the fixed-focus camera is switched to the binning mode to obtain one frame of second image; subsequently, the fixed-focus camera is switched to the Remosaic mode to obtain one frame of first image; then, the fixed-focus camera is switched to the binning mode to obtain one frame of second image, and so on. For example, a sequence that the fixed-focus camera alternates between the Remosaic mode and the binning mode may be the following alternating sequence: First, the fixed-focus camera works in the binning mode to obtain one frame of second image; next, the fixed-focus camera is switched to the Remosaic mode to obtain one frame of first image; subsequently, the fixed-focus camera is switched to the binning mode to obtain one frame of second image; then, the fixed-focus camera is switched to the Remosaic mode to obtain one frame of first image, and so on. The alternating sequence is not limited in this embodiment.

Optionally, during photographing, the terminal device may determine, based on a specific photographing scene, whether to perform photographing by using the photographing method provided in this embodiment.

Specifically, after a photographing function of the terminal device is enabled, the terminal device may first obtain a preview image, and then may detect, by using a target detection algorithm, whether a predetermined target exists in the preview image. When a predetermined target exists in the preview image, the terminal device may control the fixed-focus camera to alternately work between the Remosaic mode and the binning mode, to obtain the first image and the second image that correspond to a current photographing scene, and send the first image and the second image to another component (such as the processor) of the terminal device. The processor of the terminal device may fuse the first image and the second image to obtain the photographed image corresponding to the current photographing scene. When no predetermined target exists in the preview image, the terminal device may control the fixed-focus camera to work only in the Remosaic mode or only in the binning mode to obtain the photographed image corresponding to a current photographing scene.

For example, when no predetermined target exists in the preview image, and brightness of light in a current photographing scene is greater than or equal to a preset brightness threshold, the terminal device may control the fixed-focus camera to work in the Remosaic mode to obtain a high-pixel image corresponding to the current photographing scene. When no predetermined target exists in the preview image, and brightness of light in a current photographing scene is less than a preset brightness threshold, the terminal device may control the fixed-focus camera to work in the binning mode to obtain a high-brightness image corresponding to the current photographing scene. The preset brightness threshold may be set by a user, or may be determined by the terminal device by default.

For example, the predetermined target may be a person. In this case, the terminal device may detect, by using a face detection algorithm, whether a predetermined target exists in the preview image. For example, the predetermined target may be a specific object (such as an animal). In this case, the terminal device may detect, by using a target detection technology and an object identification technology, whether a predetermined target exists in the preview image.

It should be understood that, the preview image may be an image output by the fixed-focus camera in real time, or may be an image currently displayed on the display.

In a possible implementation, the terminal device may also set, in advance for selection by the user, a photographing mode (for example, a clear photographing mode) corresponding to the photographing method provided in this embodiment. In a photographing process, if the user selects the clear photographing mode, the terminal device may perform a photographing operation by using the photographing method provided in this embodiment.

Specifically, after the photographing function of the terminal device is enabled, the user may enable the clear photographing mode by entering a photographing instruction corresponding to the clear photographing mode. The photographing instruction may be an instruction generated by triggering a preset key, an instruction generated by triggering a preset gesture, or an instruction generated by triggering a preset voice keyword. This is not limited in this embodiment.

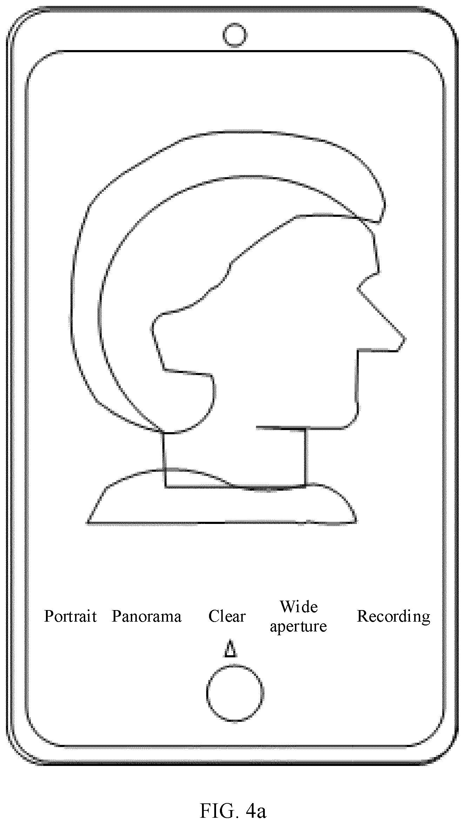

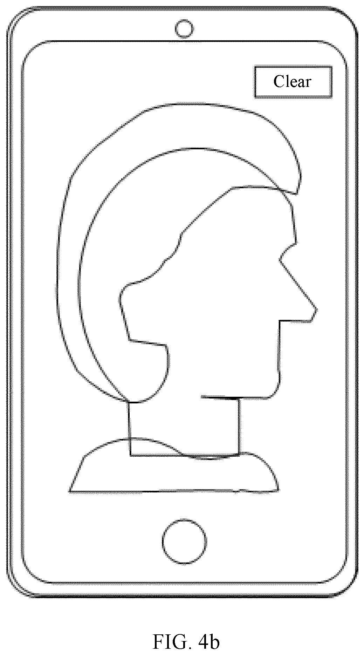

For example, as shown in FIG. 4a, after the photographing function of the terminal device is enabled, the user may select the photographing mode in a display interface of the terminal device, and the terminal device may enable the clear photographing mode based on selection of the user. Alternatively, as shown in FIG. 4b, after the photographing function of the terminal device is enabled, a virtual button for clear photographing may be presented in a display interface of the terminal device. If the user triggers the virtual button, the clear photographing mode is enabled.

For example, after the photographing function of the terminal device is enabled, the user may enable the clear photographing mode by entering the photographing instruction in a display interface of the terminal device, for example, an "O" gesture or a voice input "clear photographing".

It should be noted that, because the second image is an image obtained after pixel combination, brightness of the second image is higher than brightness of the first image. To avoid an over-exposure problem of the second image output by the fixed-focus camera, the terminal device may control the fixed-focus camera to output the first image and the second image by using different exposure parameters. For example, the terminal device may control the fixed-focus camera to output the first image by using a first exposure parameter, and may control the fixed-focus camera to output the second image by using a second exposure parameter. The first exposure parameter is greater than the second exposure parameter. Specific values of the first exposure parameter and the second exposure parameter may be determined based on a current actual photosensitive value of the fixed-focus camera.

Optionally, when fusing the first image and the second image, the terminal device may obtain the predetermined target by segmenting the first image by using an image segmentation technology, and may fuse, into a location corresponding to the predetermined target in the second image, the predetermined target obtained through segmentation, to obtain the photographed image.

Specifically, the terminal device may separately obtain a first predetermined target by segmenting the first image by using the image segmentation technology and obtain a second predetermined target by segmenting the second image by using the image segmentation technology. The first predetermined target and the second predetermined target are a same target in different images. In addition, the terminal device may obtain a location of the second predetermined target in the second image. Then, the terminal device may fuse, into the location in the second image, the first predetermined target obtained through segmentation, to obtain the photographed image.

It should be understood that there may be one or more predetermined targets in the photographing scene. When there is one predetermined target, the terminal device may directly separately obtain the predetermined target by segmenting the first image and the second image by using the image segmentation technology, and may fuse, into a location of the predetermined target in the second image, the predetermined target obtained by segmenting the first image. When there are a plurality of predetermined targets, the terminal device may use the plurality of predetermined targets as a whole, and then may separately obtain the whole by segmenting the first image and the second image by using the image segmentation technology, and may fuse, into a location of the whole in the second image, the whole obtained by segmenting the first image. Herein, when there are a plurality of predetermined targets, the terminal device may separately obtain the plurality of predetermined targets by segmenting the first image, separately obtain the plurality of predetermined targets by segmenting the second image, and obtain locations of the plurality of predetermined targets in the second image, and finally, may separately fuse, into the locations of the predetermined targets in the second image, the plurality of predetermined targets obtained by segmenting the first image.

For example, when three predetermined targets A, B, and C exist in the current photographing scene, the terminal device may separately obtain the predetermined target A, the predetermined target B, and the predetermined target C by segmenting the first image by using the image segmentation technology, and may separately obtain the predetermined target A, the predetermined target B, and the predetermined target C by segmenting the second image by using the image segmentation technology, and may obtain a location A of the predetermined target A in the second image, a location B of the predetermined target B in the second image, and a location C of the predetermined target C in the second image. Then, the terminal device may fuse, into the location A of the predetermined target A in the second image, the predetermined target A obtained by segmenting the first image, may fuse, into the location B of the predetermined target B in the second image, the predetermined target B obtained by segmenting the first image, and may fuse, into the location C of the predetermined target C in the second image, the predetermined target C obtained by segmenting the first image, to obtain the photographed image.

It may be understood that the terminal device may obtain a location of the predetermined target in the first image, determine a fusion location of the predetermined target in the second image based on a correspondence between the first image and the second image, and then may fuse, into the second image based on the fusion location, the predetermined target obtained by segmenting the first image.

It should be noted that, because the second image is a binning image relative to the first image, that is, resolution of the first image is N times resolution of the second image, a size of the second image is different from a size of the first image. For example, the size of the second image may be one quarter, one ninth, or the like of the size of the first image. Therefore, to fuse the first image and the second image, after obtaining the first image and the second image, the terminal device may first perform enlarging processing on the second image based on the size of the first image to enlarge the second image to the size of the first image, and then may obtain the predetermined target by segmenting the first image by using the image segmentation technology, and may fuse, into the enlarged second image, the predetermined target obtained through segmentation.

Herein, the enlarging operation on the second image and the segmentation operation on the predetermined target may be performed simultaneously. For example, the terminal device may simultaneously perform the enlarging operation on the second image and the segmentation operation on the predetermined target in a multi-thread parallel manner, to improve an image processing speed, improve a photographing speed, and improve user experience.

It should be understood that the foregoing step of obtaining a first image corresponding to the Remosaic mode and a second image corresponding to the binning mode may be obtaining one frame of first image corresponding to the Remosaic mode and one frame of second image corresponding to the binning mode, or may be obtaining a plurality of frames of first images corresponding to the Remosaic mode and a plurality of frames of second images corresponding to the binning mode, or may be obtaining one frame of first image corresponding to the Remosaic mode and a plurality of frames of second images corresponding to the binning mode, or may be obtaining a plurality of frames of first images corresponding to the Remosaic mode and one frame of second image corresponding to the binning mode.

When the terminal device obtains one frame of first image corresponding to the Remosaic mode and one frame of second image corresponding to the binning mode, the terminal device may directly perform segmentation and fusion on the first image and the second image, that is, may directly obtain the predetermined target by segmenting the first image, and directly fuse, into the second image, the predetermined target obtained through segmentation, to obtain the photographed image.

When the terminal device obtains a plurality of frames of first images corresponding to the Remosaic mode and a plurality of frames of second images corresponding to the binning mode, the terminal device may first separately perform image fusion processing on the plurality of frames of first images and the plurality of frames of second images by using a high dynamic range (High Dynamic Range, HDR) algorithm, to obtain a third image corresponding to the plurality of frames of first images and a fourth image corresponding to the plurality of frames of second images. Both the third image and the fourth image are HDR images. Then, the terminal device may perform segmentation and fusion on the third image and the fourth image, that is, obtain the predetermined target by segmenting the third image, and fuse, into the fourth image, the predetermined target obtained through segmentation, to obtain the photographed image. Herein, image fusion processing is separately performed on the plurality of frames of first images and the plurality of frames of second images by using the HDR algorithm, so that the obtained third image and the obtained fourth image have more dynamic ranges and image details. Therefore, the photographed image obtained through fusion based on the third image and the fourth image has higher definition. This improves an image photographing effect, and improves user experience. It should be understood that, when the terminal device obtains a plurality of frames of first images corresponding to the Remosaic mode and a plurality of frames of second images corresponding to the binning mode, the terminal device may first obtain one frame of first image with highest foreground definition in the plurality of frames of first images, and may obtain one frame of second image with highest background definition in the plurality of frames of second images. Then, the terminal device may perform segmentation and fusion on the frame of first image with the highest foreground definition and the frame of second image with the highest background definition to obtain the photographed image finally output by the terminal device. Herein, the terminal device performs segmentation and fusion by selecting the first image with the highest foreground definition and the second image with the highest background definition. This can ensure that both foreground definition and background definition of the photographed image obtained through fusion are high, and improve user experience.

Similarly, when the terminal device obtains one frame of first image corresponding to the Remosaic mode and a plurality of frames of second images corresponding to the binning mode, the terminal device may perform image fusion processing on the plurality of frames of second images to obtain a fourth image, obtain the predetermined target by segmenting the first image, and fuse, into a location of the predetermined target in the fourth image, the predetermined target obtained through segmentation, to obtain the photographed image. Alternatively, the terminal device may obtain one frame of second image with highest background definition in the plurality of frames of second images, obtain the predetermined target by segmenting the first image, and fuse, into a location of the predetermined target in the frame of second image with the highest background definition, the predetermined target obtained through segmentation, to obtain the photographed image.

When the terminal device obtains a plurality of frames of first images corresponding to the Remosaic mode and one frame of second image corresponding to the binning mode, the terminal device may perform image fusion processing on the plurality of frames of first images to obtain a third image, obtain the predetermined target by segmenting the third image, and fuse, into a location of the predetermined target in the second image, the predetermined target obtained through segmentation, to obtain the photographed image. Alternatively, the terminal device may obtain one frame of first image with highest foreground definition in the plurality of frames of first images, obtain the predetermined target by segmenting the frame of the first image with the highest foreground definition, and fuse, into a location of the predetermined target in the second image, the predetermined target obtained through segmentation, to obtain the photographed image.

Herein, the terminal device may separately perform image fusion on the plurality of frames of first images and the plurality of frames of second images by using the HDR algorithm in a conventional technology. This is not limited in this embodiment.

It should be noted that, after completing fusion on the first image and the second image to obtain a fusion image, the terminal device may detect a fusion part in the fusion image. If there is no gap in the fusion part, the terminal device may directly determine the fusion image as the photographed image finally output by the terminal device. If there is a gap in the fusion part, and the gap is less than a specified gap threshold, the terminal device may fill the gap through interpolation, and may determine the fusion image existing after filling as the photographed image finally output by the terminal device. If there is a gap in the fusion part, and the gap is greater than or equal to a specified gap threshold, the terminal device may perform fusion processing on the first image and the second image again, or may obtain again the first image and the second image that correspond to the current photographing scene, and perform fusion processing on the first image and the second image that are obtained again. The specified gap threshold may be specifically determined based on an actual case. Herein, the terminal device may fill the gap through interpolation in the conventional technology. This is not limited in this embodiment.

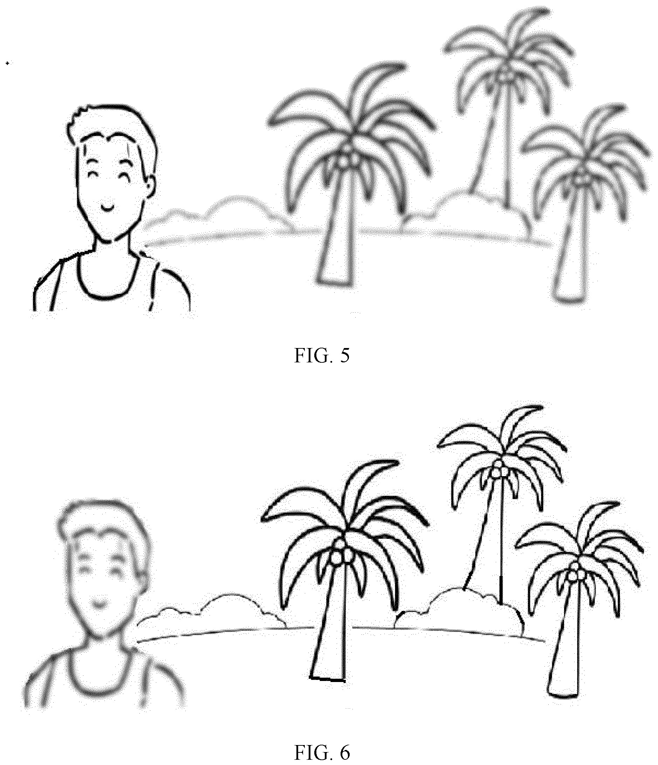

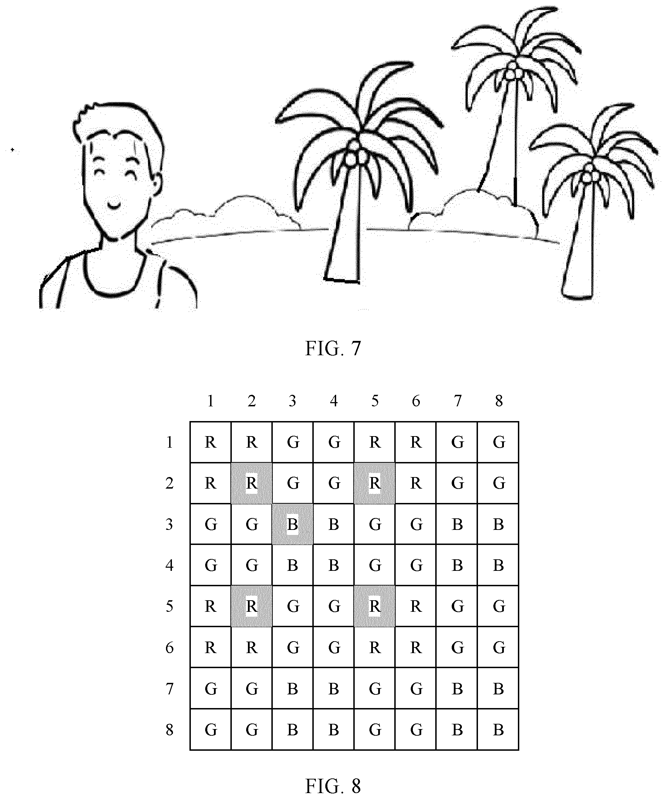

FIG. 5 shows the first image that is obtained by the terminal device and that corresponds to the Remosaic mode. FIG. 6 shows the second image that is obtained by the terminal device and that corresponds to the binning mode. FIG. 7 shows the final photographed image obtained by performing segmentation and fusion on FIG. 5 and FIG. 6 in this embodiment. It may be learned through comparison between FIG. 7 and both FIG. 5 and FIG. 6 that both the foreground definition and the background definition of the photographed image obtained in this embodiment are high, so that the user can view an image with clear foreground and clear background. This improves a photographing effect of the terminal device, and improves user experience.

In the photographing method provided in this embodiment, the terminal device may obtain the first image and the second image that are output by the fixed-focus camera, and may perform segmentation and fusion on the first image and the second image, that is, may fuse the high-definition foreground of the first image into the second image whose background definition is high, to obtain the photographed image whose foreground definition and background definition are both high. This improves a photographing effect of the terminal device, and improves user experience.

### Embodiment 2

In the photographing method provided in the foregoing Embodiment 1, the first image and the second image are separately obtained by using the fixed-focus camera, and image fusion processing is performed on the first image and the second image, to obtain the photographed image finally output by the terminal device. In other words, the first image and the second image in the foregoing Embodiment 1 are two frames of images separately obtained by the fixed-focus camera. In other words, there is a time difference between the first image and the second image that are obtained by the fixed-focus camera. Therefore, foreground (for example, a location or a posture of the predetermined target) of the first image and the second image may change to an extent. Consequently, a gap may occur in the photographed images obtained by the terminal device through fusion. When the gap that occurs is small, although the gap may be filled through interpolation, the manner of filling the gap through interpolation reduces an image effect to an extent. When the gap that occurs is large, the terminal device needs to perform fusion processing on the first image and the second image again, or the terminal device needs to obtain the first image and the second image again, and perform fusion processing again on the first image and the second image that are obtained again. As a result, a photographing speed of the terminal device is reduced and/or a photographing effect of the terminal device is reduced, and user experience is greatly reduced.

To alleviate the foregoing problem, in the photographing method provided in this embodiment, first, one frame of Remosaic original color-block image may be obtained by using a fixed-focus camera; next, a first image corresponding to a Remosaic mode and a second image corresponding to a binning mode may be obtained by performing conversion processing on the Remosaic original color-block image; and finally, a photographed image finally output by the terminal device may be obtained by performing segmentation and fusion on the first image and the second image.

In other words, the first image and the second image that are obtained in this embodiment are from a same frame of Remosaic original color-block image. Therefore, there is no foreground change problem between the first image and the second image that are obtained in this embodiment, that is, foreground and background of the first image obtained in this embodiment are respectively consistent with foreground and background of the second image. Therefore, a problem that a gap occurs in the fusion part after the first image and the second image are fused because the foreground is changed in the foregoing Embodiment 1 can be resolved. In this way, interpolation processing can be prevented from being performed on the fusion part, or the terminal device can be prevented from performing secondary fusion processing on the first image and the second image, or the terminal device can be prevented from performing secondary obtaining and secondary fusion processing on the first image and the second image. This greatly improves a photographing speed and a photographing effect of the terminal device, and improves user experience.

It should be understood that a difference between this embodiment and the foregoing Embodiment 1 lies in that the first image and the second image in this embodiment are obtained by converting one frame of Remosaic original color-block image obtained by the fixed-focus camera. In other words, only a manner of obtaining the first image and the second image in this embodiment is different from a manner of obtaining the first image and the second image in the foregoing Embodiment 1, and other content is the same as that in the foregoing Embodiment 1. The following mainly describes a difference part between this embodiment and the foregoing Embodiment 1. For a same part, refer to the descriptions in the foregoing Embodiment 1 directly. Details are not described herein again.

For example, the fixed-focus camera in this embodiment may be a four-in-one camera. During photographing, a photosensitive component in the fixed-focus camera may be controlled to perform exposure successively, so that the fixed-focus camera can obtain an original Remosaic color-block image shown in FIG. 8.

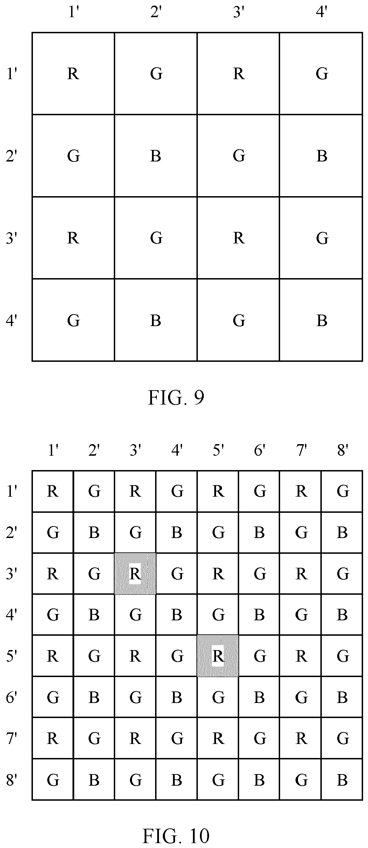

In a possible implementation, after obtaining the original Remosaic color-block image, the fixed-focus camera may send the original Remosaic color-block image to another component (such as the processor) of the terminal device. The processor of the terminal device may output four pixels with a same color in the original Remosaic color-block image as a combined pixel. For example, an original Remosaic color-block image shown in FIG. 8 may be output as a combined pixel shown in FIG. 9, to obtain the second image corresponding to the binning mode. In addition, the processor may convert, for output by using a Remosaic software algorithm, the original Remosaic color-block image into pixels arranged in a Bayer array. For example, an original Remosaic color-block image shown in FIG. 8 may be converted, for output, into a Remosaic structure that is arranged in a Bayer array and that is shown in FIG. 10, to obtain the first image corresponding to the Remosaic mode. For example, the Remosaic software algorithm may be used to determine, by using an associated pixel, a pixel value corresponding to each pixel obtained after conversion.

For example, when determining pixel values corresponding to pixels R3'3' and R5'5' that are obtained after conversion in FIG. 10, the terminal device may first determine an associated pixel R33 in FIG. 8 that corresponds to the pixel R3'3' obtained after conversion, and determine an associated pixel R55 in FIG. 8 that corresponds to the pixel R5'5' obtained after conversion. Then, the pixel value corresponding to R3'3' may be determined based on the associated pixel R33, and the pixel value corresponding to R5'5' may be determined based on the associated pixel R55.

Specifically, when determining the pixel value corresponding to R5'5', because R5'5' has a same color as the associated pixel R55, the terminal device may directly determine a pixel value corresponding to the R55 as the pixel value corresponding to R5'5'. When determining the pixel value corresponding to R3'3', because R3'3' has a different color from the associated pixel R33, the terminal device cannot directly determine a pixel value corresponding to the R33 as the pixel value corresponding to R3'3'. In this case, the terminal device may obtain one or more pixels in FIG. 8 that are adjacent to the associated pixel R33 and that have a same color as R3'3', and may determine, based on pixel values corresponding to the one or more pixels, the pixel value corresponding to R3'3'. It should be noted that the adjacency herein should be understood in a general sense, for example, the one or more pixels may be understood as one or more pixels in FIG. 8 that are closest to the associated pixel R33 and that are in all pixels having a same color as R3'3'.

It should be noted that a quantity of pixels that are obtained by the terminal device and that are adjacent to the associated pixel R33 may be specifically determined based on an actual case, for example, may be four or another quantity. For example, when there are four pixels that are obtained by the terminal device and that are adjacent to the associated pixel, in FIG. 8, the four pixels that are adjacent to the associated pixel R33 and that have a same color as R3'3' may be R22, R25, R52, and R55.

For example, when there are a plurality of pixels that are obtained by the terminal device and that are adjacent to the associated pixel R33, the terminal device may determine a largest pixel value corresponding to the plurality of pixels as the pixel value corresponding to R3'3'. For example, if a pixel value corresponding to R55 in R22, R25, R52, and R55 is the largest, the pixel value corresponding to R55 may be determined as the pixel value corresponding to the R3'3'.

For example, when there are a plurality of pixels that are obtained by the terminal device and that are adjacent to the associated pixel R33, the terminal device may determine a smallest pixel value corresponding to the plurality of pixels as the pixel value corresponding to R3'3'. For example, if a pixel value corresponding to R25 in R22, R25, R52, and R55 is the smallest, the pixel value corresponding to R25 may be determined as the pixel value corresponding to the R3'3'.

For example, when there are a plurality of pixels that are obtained by the terminal device and that are adjacent to the associated pixel R33, the terminal device may determine an average pixel value corresponding to the plurality of pixels as the pixel value corresponding to R3'3'. For example, an average pixel value (R22+R25+R52+R55)/4 corresponding to R22, R25, R52, and R55 may be determined as the pixel value corresponding to R3'3'.

For example, when there are a plurality of pixels that are obtained by the terminal device and that are adjacent to the associated pixel R33, first, the terminal device may determine, based on a near-far relationship between a pixel and an associated pixel, a weight corresponding to each pixel; next, the terminal device may perform, based on the weight, weighted summation on pixel values corresponding to the plurality of pixels; and the terminal device may determine, as the pixel value corresponding to R3'3', a pixel value obtained through weighted summation. For example, when the terminal device determines, based on the near-far relationship between a pixel and an associated pixel, that a weight corresponding to R22 is Q1, a weight corresponding to R25 is Q2, a weight corresponding to R52 is Q3, and a weight corresponding to R55 is Q4, the terminal device may determine, as the pixel value corresponding to R3'3', a pixel value (R22*Q1+R25*Q2+R52*Q3+R55*Q4) obtained through weighted summation.

It should be understood that the foregoing determining, as the pixel value corresponding to R3'3', the largest pixel value, the smallest pixel value, the average pixel value, and the pixel value obtained through weighted summation is merely an example for description, and should not be understood as a limitation on this embodiment. Certainly, in this embodiment, the pixel value corresponding to R3'3' may be determined in another determining manner in the existing Remosaic software algorithm.

In another possible implementation, the processor of the terminal device may perform pixel structure conversion on the original Remosaic color-block image by using a hardware module (namely, a hardware module that may implement a Remosaic algorithm), to convert the original Remosaic color-block image into a pixel structure arranged in a Bayer array and output the pixel structure, so as to obtain the first image corresponding to the Remosaic mode. An execution speed of the hardware module is faster than an execution speed of software in the terminal device. Therefore, the terminal device converts, by using the hardware module, the original Remosaic color-block image into the pixel structure arranged in the Bayer array and output the pixel structure, so that a speed of obtaining the first image can be greatly improved, and photographing efficiency of the terminal device can be further improved.

In a possible implementation, the fixed-focus camera is integrated with a hardware module that may implement a Remosaic algorithm. Therefore, after obtaining the original Remosaic color-block image, the fixed-focus camera may output, as a combined pixel through pixel combination, a plurality of pixels with a same color in the original Remosaic color-block image, to obtain the second image corresponding to the binning mode. In addition, pixel structure conversion may be performed on the original Remosaic color-block image by using the hardware module of the fixed-focus camera, to convert the original Remosaic color-block image into a pixel structure arranged in a Bayer array and output the pixel structure, so as to obtain the first image corresponding to the Remosaic mode. Then, the fixed-focus camera may output the first image corresponding to the Remosaic mode and the second image corresponding to the binning mode to the processor of the terminal device. The processor may perform segmentation and fusion on the first image and the second image to obtain the final photographed image.

It should be understood that a process of performing segmentation and fusion on the first image and the second image herein is similar to the process of performing segmentation and fusion on the first image and the second image in Embodiment 1, and a basic principle thereof is the same. For specific content, refer to the descriptions in Embodiment 1. Details are not described herein again.

In the photographing method provided in this embodiment, conversion processing may be performed on only one frame of Remosaic original color-block image to obtain the first image corresponding to the Remosaic mode and the second image corresponding to the binning mode. Then, segmentation and fusion may be performed on the first image and the second image to obtain the photographed image finally output by the terminal device. Both foreground definition and background definition of the obtained photographed image are high. In addition, because there is no foreground change problem between the first image and the second image, there may be no gap in the fusion part obtained after the first image and the second image are fused. In this way, interpolation processing can be prevented from being performed on the fusion part, or the terminal device can be prevented from performing secondary fusion processing on the first image and the second image. This greatly improves a photographing speed and a photographing effect of the terminal device, and improves user experience. In addition, in this embodiment, because the fixed-focus camera needs to obtain only one frame of Remosaic original color-block image, the fixed-focus camera does not need to be switched back and forth between the Remosaic mode and the binning mode. Therefore, time and power consumed by performing mode switching by the fixed-focus camera can be greatly reduced, and a speed of obtaining the first image and the second image by the terminal device can be improved. This further improves photographing efficiency of the terminal device, and improves user experience.

Based on the foregoing descriptions in Embodiment 1 and Embodiment 2, the following briefly describes photographing processes in Embodiment 1 and Embodiment 2.

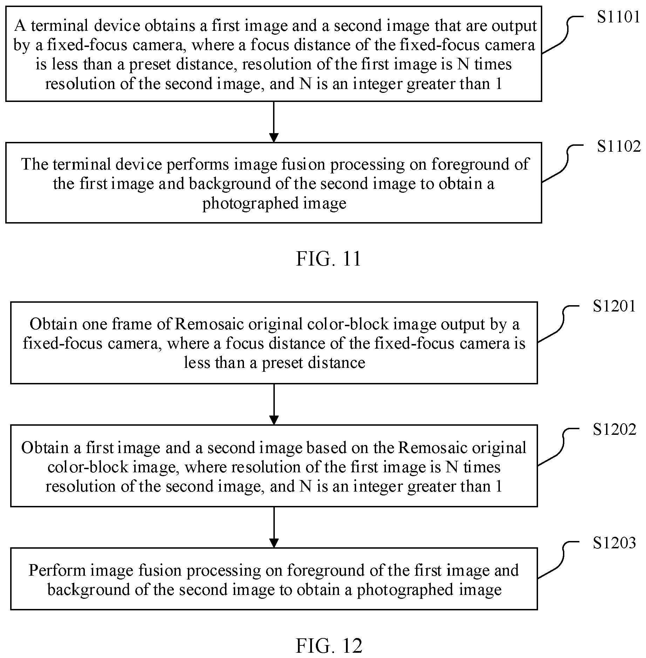

FIG. 11 is a schematic flowchart of a photographing method according to Embodiment 1. In this embodiment, a terminal device obtains a first image and a second image that are output by a fixed-focus camera. As shown in FIG. 11, the photographing method may include the following steps:

S1101. The terminal device obtains a first image and a second image that are output by a fixed-focus camera, where a focus distance of the fixed-focus camera is less than a preset distance, resolution of the first image is N times resolution of the second image, N is an integer greater than 1, and the first image and the second image include a same photographing scene.

S1102. The terminal device performs image fusion processing on foreground of the first image and background of the second image to obtain a photographed image.

The fixed-focus camera is a fixed-focus camera with a short focus distance, namely, a fixed-focus camera whose focus distance is less than the preset distance. Herein, the preset distance may be determined based on an actual case. For example, the preset distance may be determined as 50 centimeters or 60 centimeters based on an actual case.

It should be understood that the terminal device may first obtain a preview image, and detect whether a predetermined target exists in the preview image. When a predetermined target exists in the preview image, the terminal device obtains at least one frame of first image and at least one frame of second image that are output by the fixed-focus camera.

It should be noted that, when the terminal device obtains a plurality of frames of first images and a plurality of frames of second images, the terminal device may first perform fusion processing on the plurality of frames of first images by using an HDR algorithm, to obtain a third image, and may perform fusion processing on the plurality of frames of second images by using the HDR algorithm, to obtain a fourth image. Then, the terminal device performs segmentation and fusion on the third image and the fourth image to obtain the photographed image output by the terminal device.

In the photographing method provided in this embodiment, the terminal device may obtain the first image and the second image that are output by the fixed-focus camera, and may perform image fusion on the first image and the second image, that is, may fuse the high-definition foreground of the first image into the second image whose background definition is high, to obtain the photographed image whose foreground definition and background definition are both high. This improves a photographing effect of the terminal device, and improves user experience.

FIG. 12 is a schematic flowchart of a photographing method according to Embodiment 2. In this embodiment, a terminal device obtains one frame of Remosaic original color-block image output by a fixed-focus camera. As shown in FIG. 12, the photographing method may include the following steps:

S1201. Obtain one frame of Remosaic original color-block image output by a fixed-focus camera, where a focus distance of the fixed-focus camera is less than a preset distance.

S1202. Obtain a first image and a second image based on the Remosaic original color-block image, where resolution of the first image is N times resolution of the second image, N is an integer greater than 1, and the first image and the second image include a same photographing scene.

S1203. Perform image fusion processing on foreground of the first image and background of the second image to obtain a photographed image.

It should be understood that the terminal device may first obtain a preview image, and detect whether a predetermined target exists in the preview image. When a predetermined target exists in the preview image, the terminal device obtains one frame of Remosaic original color-block image output by the fixed-focus camera.

In the photographing method provided in this embodiment, first, one frame of Remosaic original color-block image may be obtained by using the fixed-focus camera; next, the first image corresponding to a Remosaic mode and the second image corresponding to a binning mode may be obtained by performing conversion processing on the Remosaic original color-block image; and finally, segmentation and fusion may be performed on the first image and the second image to obtain the photographed image finally output by the terminal device. Because the first image and the second image are obtained by using a same frame of Remosaic original color-block image, there may be no gap in a fusion part obtained after the first image and the second image are fused. In this way, interpolation processing can be prevented from being performed on the fusion part, or the terminal device can be prevented from performing secondary fusion processing on the first image and the second image. This greatly improves a photographing speed and a photographing effect of the terminal device, and improves user experience.

It should be understood that sequence numbers of the foregoing processes do not mean execution sequences in various embodiments. The execution sequences of the processes should be determined according to functions and internal logic of the processes, and should not be construed as any limitation on the implementation processes of embodiments of this application.

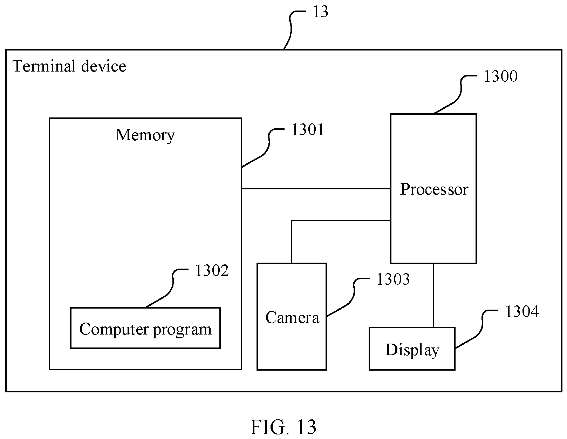

FIG. 13 is a schematic diagram of a structure of a terminal device according to an embodiment of this application. As shown in FIG. 13, a terminal device 13 in this embodiment includes at least one processor 1300 (only one processor is shown in FIG. 13), a memory 1301, and a computer program 1302 that is stored in the memory 1301 and that can be run on the at least one processor 1300. When the processor 1300 executes the computer program 1302, the terminal device is enabled to implement steps in any one of the embodiments of the foregoing photographing methods.

Optionally, the terminal device 13 may further include a camera 1303, a display 1304, and the like. The camera 1303 may obtain an optical image generated by photographing an object, and may convert the optical image into an electrical signal. Then, the electrical signal is converted into a digital signal through analog-to-digital conversion. Subsequently, the digital signal may be processed by using a digital signal processor DSP, and the processed digital signal may be sent to the processor 1300 for processing, to finally convert the processed digital signal into an image that can be viewed on the display 1304.

The processor 1300 may be a central processing unit (Central Processing Unit, CPU). The processor 1300 may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The general-purpose processor may be a microprocessor, or the processor 1300 may be any conventional processor or the like.

In some embodiments, the memory 1301 may be an internal storage unit of the terminal device 13, for example, a hard disk or memory of the terminal device 13. In some other embodiments, the memory 1301 may be an external storage device of the terminal device 13, for example, a removable hard disk, a smart media card (Smart Media Card, SMC), a secure digital (Secure Digital, SD) card, or a flash card (Flash Card) that is configured on the terminal device 13. Further, the memory 1301 may include an internal storage unit of the terminal device 13, and also include an external storage device. The memory 1301 is configured to store an operating system, an application program, a bootloader (BootLoader) program, data, another program, and the like, for example, program code used to store a computer program. The processor 1300 implements various function applications (such as a photographing function) and data processing of the terminal device 13 by running the program code stored in the memory 1301. The memory 1301 may be further configured to temporarily store data that has been or is to be output.

It should be noted that FIG. 13 is merely an example of the terminal device 13, and does not constitute a limitation on the terminal device 13. The terminal device 13 may include more or fewer components than those shown in the figure, or combine some components, or have different components. For example, the terminal device 13 may include an input/output device, a network access device, and the like.

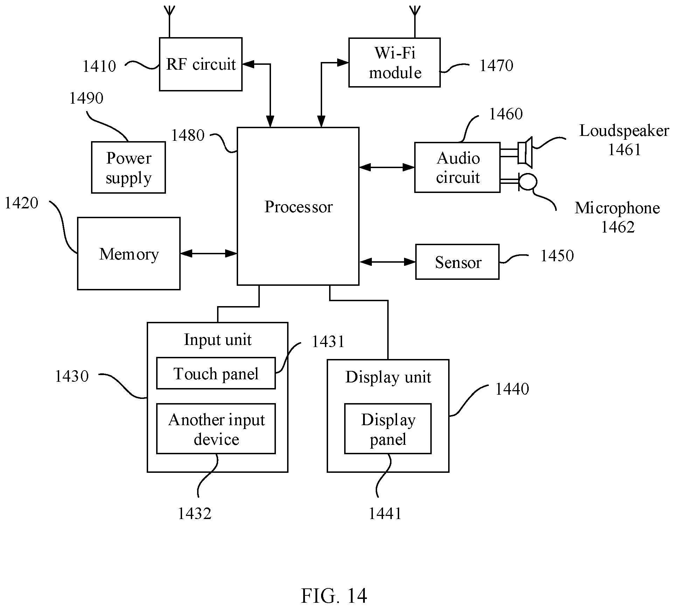

For example, the terminal device in this embodiment of this application may be a mobile phone, a tablet computer, a wearable device, or the like. An example in which the terminal device is a mobile phone is used. FIG. 14 is a block diagram of a partial structure of a mobile phone according to an embodiment of this application. As shown FIG. 14, the mobile phone may include components such as a radio frequency (Radio Frequency, RF) circuit 1410, a memory 1420, an input unit 1430, a display unit 1440, a sensor 1450, an audio circuit 1460, a wireless fidelity (wireless fidelity, WiFi) module 1470, a processor 1480, and a power supply 1490. A person skilled in the art may understand that the structure of the mobile phone shown in FIG. 14 does not constitute a limitation on the mobile phone, and the mobile phone may include more or fewer components than those shown in the figure, or combine some components, or have different component arrangements.

The components of the mobile phone are described in detail below with reference to FIG. 14.

The RF circuit 1410 may be configured to receive and send a signal in an information receiving/sending process or a call process. In particular, after receiving downlink information of a base station, the RF circuit 1410 sends the downlink information to the processor 1480 for processing, and in addition, sends related uplink data to the base station. Usually, an RF circuit 1410 includes but is not limited to an antenna, at least one amplifier, a transceiver, a coupler, a low noise amplifier (Low Noise Amplifier, LNA), a duplexer, and the like. In addition, the RF circuit 1410 may further communicate with a network and another device through wireless communication. The wireless communication may use any communication standard or protocol, including but not limited to a global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Messaging Service, SMS), and the like.

The memory 1420 may be configured to store a software program and a module. The processor 1480 performs various function applications and data processing of the mobile phone by running the software program and the module that are stored in the memory 1420. The memory 1420 may mainly include a program storage area and a data storage area. The program storage area may store an operating system, an application program required by at least one function (such as a sound play function and an image display function), and the like. The data storage area may store data (such as audio data or an address book) created based on use of the mobile phone, and the like. In addition, the memory 1420 may include a high-speed random access memory, or may include a nonvolatile memory, such as at least one magnetic disk storage device, a flash memory device, or another volatile solid-state storage device.

The input unit 1430 may be configured to receive input digit or character information, and generate a key signal input related to a user setting and function control of the mobile phone. Specifically, the input unit 1430 may include a touch panel 1431 and another input device 1432. The touch panel 1431, also referred to as a touchscreen, may collect a touch operation performed by a user on or near the touch panel 1431 (for example, an operation performed by the user on the touch panel 1431 or near the touch panel 1431 by using any suitable object or accessory such as a finger or a stylus), and drive a corresponding connection apparatus based on a preset program. Optionally, the touch panel 1431 may include two parts: a touch detection apparatus and a touch controller. The touch detection apparatus detects a touch location of the user, detects a signal generated by the touch operation, and transfers the signal to the touch controller. The touch controller receives the touch information from the touch detection apparatus, converts the touch information into touch point coordinates, and then sends the touch point coordinates to the processor 1480. In addition, the touch controller can receive and execute a command sent by the processor 1480. In addition, the touch panel 1431 may be implemented by using a plurality of types, such as a resistive type, a capacitive type, an infrared ray type, and a surface acoustic wave type. In addition to the touch panel 1431, the input unit 1430 may include the another input device 1432. Specifically, the another input device 1432 may include but be not limited to one or more of a physical keyboard, a functional key (such as a volume control key or an on/off key), a trackball, a mouse, or a joystick.

The display unit 1440 may be configured to display information entered by the user or information provided for the user and various menus of the mobile phone. The display unit 1440 may include a display panel 1441. Optionally, the display panel 1441 may be configured in a form such as a liquid crystal display (Liquid Crystal Display, LCD) or an organic light-emitting diode (Organic Light-Emitting Diode, OLED). Further, the touch panel 1431 may cover the display panel 1441. After detecting a touch operation on or near the touch panel 1431, the touch panel 1431 transfers the touch operation to the processor 1480, to determine a type of a touch event. Subsequently, the processor 1480 provides a corresponding visual output on the display panel 1441 based on the type of the touch event. In FIG. 14, the touch panel 1431 and the display panel 1441 are used as two independent components to implement input and output functions of the mobile phone. However, in some embodiments, the touch panel 1431 and the display panel 1441 may be integrated to implement the input and output functions of the mobile phone.

The mobile phone may further include at least one type of sensor 1450, for example, a light sensor, a motion sensor, and another sensor. Specifically, the light sensor may include an ambient light sensor and a proximity sensor. The ambient light sensor may adjust luminance of the display panel 1441 based on brightness of ambient light. The proximity sensor may turn off the display panel 1441 and/or backlight when the mobile phone moves to the car of the user. As a type of movement sensor, an accelerometer sensor may detect a value of acceleration in each direction (usually on three axes), may detect a value and a direction of gravity in a stationary state, and may be used in an application for identifying a mobile phone posture (such as screen switching between a landscape mode and a portrait mode, a related game, or magnetometer posture calibration), a function related to vibration identification (such as a pedometer or a knock), or the like. Other sensors such as a gyroscope, a barometer, a hygrometer, a thermometer, or an infrared sensor may be further configured in the mobile phone. Details are not described herein.

The audio circuit 1460, a loudspeaker 1461, and a microphone 1462 can provide an audio interface between the user and the mobile phone. The audio circuit 1460 may convert received audio data into an electrical signal and transmit the electrical signal to the loudspeaker 1461. The loudspeaker 1461 converts the electrical signal into a sound signal for output. In addition, the microphone 1462 converts a collected sound signal into an electrical signal. The audio circuit 1460 converts the electrical signal into audio data after receiving the electrical signal, and then outputs the audio data to the processor 1480. The processor 1480 processes the audio data, and then sends the processed audio data to, for example, another mobile phone, by using the RF circuit 1410, or outputs the processed audio data to the memory 1420 for further processing.

Wi-Fi belongs to a short-distance wireless transmission technology. The mobile phone may help, by using the Wi-Fi module 1470, the user receive and send an email, browse a web page, access streaming media, and the like. The Wi-Fi module 1470 provides wireless broadband Internet access for the user. Although FIG. 14 shows the Wi-Fi module 1470, it may be understood that the Wi-Fi module 1470 is not a necessary component of the mobile phone, and may be totally omitted as required without changing the essence of the present invention.

The processor 1480 is a control center of the mobile phone, and connects various parts of the entire mobile phone by using various interfaces and lines. By running or executing the software program and/or the module stored in the memory 1420 and invoking the data stored in the memory 1420, the processor 1480 performs various functions and/or data processing of the mobile phone, to perform overall monitoring on the mobile phone. Optionally, the processor 1480 may include one or more processing units. Preferably, the processor 1480 may integrate an application processor and a modem processor. The application processor mainly processes an operating system, a user interface, an application, and the like. The modem processor mainly processes wireless communication. It may be understood that the foregoing modem processor may be not integrated into the processor 1480.

The mobile phone further includes a power supply 1490 (such as a battery) for supplying power to each component. Preferably, the power supply may be logically connected to the processor 1480 by using a power management system, to implement functions such as charging, discharging, and power consumption management by using the power management system.

Although not shown, the mobile phone may further include a camera. Optionally, a location of the camera on the mobile phone may be a front location, or may be a rear location. This is not limited in this embodiment of this application.

Optionally, the mobile phone may include a single camera, a dual camera, three cameras, or the like. This is not limited in this embodiment of this application.

For example, the mobile phone may include three cameras, one is a primary camera, one is a wide-angle camera, and one is a long-focus camera.

Optionally, when the mobile phone includes a plurality of cameras, the plurality of cameras may be all front-facing cameras, or may be all rear-facing cameras, or some cameras are front-facing cameras and some other cameras are rear-facing cameras. This is not limited in this embodiment of this application.

In addition, although not shown in the figure, the mobile phone may further include a Bluetooth module and the like. Details are not described herein.

An embodiment of this application further provides a computer-readable storage medium. The computer-readable storage medium stores a computer program. When the computer program is executed by a computer, the computer is enabled to implement the steps in the foregoing method embodiments.

An embodiment of this application provides a computer program product. When the computer program product runs on a terminal device, the terminal device is enabled to implement steps in the foregoing method embodiments.

When the integrated unit is implemented in the form of a software functional unit and sold or used as an independent product, the integrated unit may be stored in a computer-readable storage medium. Based on such an understanding, in this application, all or some processes in the methods of the foregoing embodiments may be completed by a computer program instructing related hardware. The computer program may be stored in a computer-readable storage medium. When the computer program is executed by the processor, the steps in the foregoing method embodiments may be implemented. The computer program includes computer program code, and the computer program code may be in a form of source code, a form of object code, a form of an executable file, some intermediate forms, or the like. The computer-readable storage medium may include at least any entity or apparatus that can include computer program code into an apparatus/a terminal device, a recording medium, a computer memory, a read-only memory (Read-Only Memory, ROM), a random access memory (Random Access Memory, RAM), an electrical carrier signal, a telecommunication signal, and a software distribution medium, for example, a USB flash drive, a removable hard disk, a magnetic disk, or an optical disc. In some jurisdictions, based on legislation and patent practice, the computer-readable storage medium cannot be an electrical carrier signal or a telecommunication signal.

In the foregoing embodiments, the description of each embodiment has respective focuses. For a part that is not described in detail in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/terminal device and method may be implemented in other manners. For example, the described apparatus/terminal device embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

## Claims

1. A photographing method, comprising:
obtaining a first image and a second image that are output by a fixed-focus camera, wherein a focus distance of the fixed-focus camera is less than a preset distance, resolution of the first image is N times resolution of the second image, N is an integer greater than 1, and the first image and the second image comprise a same photographing scene, wherein the second image is obtained in a binning mode; and
performing image fusion processing on foreground of the first image and background of the second image to obtain a photographed image wherein the foreground of the first image includes a predetermined target located inside a depth of field of the fixed-focus camera.

2. The photographing method of claim 1, the obtaining a first image and a second image that are output by a fixed-focus camera comprises:
obtaining a Remosaic original color-block image output by the fixed-focus camera; and
obtaining the first image and the second image based on the Remosaic original color-block image.

3. The method according to claim 1, wherein the obtaining a first image and a second image that are output by a fixed-focus camera comprises:
obtaining a preview image output by the fixed-focus camera, and detecting whether the predetermined target exists in the preview image; and
when the predetermined target exists in the preview image, obtaining the first image and the second image that are output by the fixed-focus camera.

4. The method according to claim 2, wherein the obtaining a Remosaic original color-block image output by a fixed-focus camera comprises:
obtaining a preview image output by the fixed-focus camera, and detecting whether the predetermined target exists in the preview image; and
when the predetermined target exists in the preview image, obtaining the Remosaic original color-block image output by the fixed-focus camera.

5. The method according to any one of claims 1 to 4, wherein foreground definition of the first image is higher than foreground definition of the second image, and background definition of the second image is higher than background definition of the first image.

6. The method according to any one of claims 1 to 5, wherein the first image is a full-size image, and the resolution of the second image is 1/4 of the resolution of the first image.

7. The method according to claim 3 or 4, wherein when the obtained first image and the obtained second image each are one frame, the performing image fusion processing on foreground of the first image and background of the second image to obtain a photographed image comprises:
obtaining the predetermined target by segmenting the first image, and fusing, into a location of the predetermined target in the second image, the predetermined target obtained through segmentation, to obtain the photographed image.

8. The method according to claim 3 or 4, wherein when the obtained first image and the obtained second image each are at least two frames, the performing image fusion processing on foreground of the first image and background of the second image to obtain a photographed image comprises:
performing image fusion processing on the at least two frames of first images to obtain a third image, and performing image fusion processing on the at least two frames of second images to obtain a fourth image; and
obtaining the predetermined target by segmenting the third image, and fusing, into a location of the predetermined target in the fourth image, the predetermined target obtained through segmentation, to obtain the photographed image.

9. The method according to claim 3 or 4, wherein when the obtained first image is one frame, and the obtained second image is at least two frames, the performing image fusion processing on foreground of the first image and background of the second image to obtain a photographed image comprises:
performing image fusion processing on the at least two frames of second images to obtain a fourth image, obtaining the predetermined target by segmenting the first image, and fusing, into a location of the predetermined target in the fourth image, the predetermined target obtained through segmentation, to obtain the photographed image; or
when the obtained first image is at least two frames, and the obtained second image is one frame, the performing image fusion processing on foreground of the first image and background of the second image to obtain a photographed image comprises:
performing image fusion processing on the at least two frames of first images to obtain a third image, obtaining the predetermined target by segmenting the third image, and fusing, into a location of the predetermined target in the second image, the predetermined target obtained through segmentation, to obtain the photographed image.

10. The method according to claim 8 or 9, wherein the third image and the fourth image are high dynamic range HDR images.

11. The method according to any one of claims 1 to 10, wherein before the performing image fusion processing on foreground of the first image and background of the second image, the method comprises:
enlarging a size of the second image to a size of the first image based on the resolution of the first image and the resolution of the second image.

12. A terminal device (13), comprising a memory (1301, 1420), a processor (1300, 1480), and a computer program (1302) that is stored in the memory (1301, 1420) and that can be run on the processor (1300, 1480), wherein when the processor (1300, 1480) executes the computer program (1302), the terminal device (13) is enabled to implement the photographing method according to any one of claims 1 to 11.

13. A computer-readable storage medium, wherein the computer-readable storage medium stores a computer program (1302), and when the computer program (1302) is executed by a computer, the computer is enabled to implement the photographing method according to any one of claims 1 to 11.

14. A computer program product, wherein when the computer program product runs on a computer device, the computer device is enabled to perform the method according to any one of claims 1 to 11.

## Patentansprüche

1. Fotografierverfahren, das umfasst:
Erhalten eines ersten Bildes und eines zweiten Bildes, die durch eine Fixfokuskamera ausgegeben werden, wobei eine Fokaldistanz der Fixfokuskamera kleiner als eine voreingestellte Distanz ist, eine Auflösung des ersten Bildes die N-fache Auflösung des zweiten Bildes ist, N eine ganze Zahl größer als 1 ist und das erste Bild und das zweite Bild eine gleiche Fotografierszene umfassen, wobei das zweite Bild in einem Binning-Modus erhalten wird; und
Durchführen einer Bildverschmelzungsverarbeitung an einem Vordergrund des ersten Bildes und einem Hintergrund des zweiten Bildes, um ein fotografiertes Bild zu erhalten, wobei der Vordergrund des ersten Bildes ein zuvor bestimmtes Ziel, das sich innerhalb einer Schärfentiefe der Fixfokuskamera befindet, einschließt.

2. Fotografierverfahren nach Anspruch 1, wobei das Erhalten eines ersten Bildes und eines zweiten Bildes, die durch eine Fixfokuskamera ausgegeben werden, umfasst:
Erhalten eines ursprünglichen Remosaic-Farbblockbildes, das durch die Fixfokuskamera ausgegeben wird; und
Erhalten des ersten Bildes und des zweiten Bildes basierend auf dem ursprünglichen Remosaic-Farbblockbild.

3. Verfahren nach Anspruch 1, wobei das Erhalten eines ersten Bildes und eines zweiten Bildes, die durch eine Fixfokuskamera ausgegeben werden, umfasst:
Erhalten eines Vorschaubildes, das durch die Fixfokuskamera ausgegeben wird, und Erkennen, ob das zuvor bestimmte Ziel in dem Vorschaubild vorhanden ist; und
wenn das zuvor bestimmte Ziel in dem Vorschaubild vorhanden ist, Erhalten des ersten Bildes und des zweiten Bildes, die durch die Fixfokuskamera ausgegeben werden.

4. Verfahren nach Anspruch 2, wobei das Erhalten eines ursprünglichen Remosaic-Farbblockbildes, das durch eine Fixfokuskamera ausgegeben wird, umfasst:
Erhalten eines Vorschaubildes, das durch die Fixfokuskamera ausgegeben wird, und Erkennen, ob das zuvor bestimmte Ziel in dem Vorschaubild vorhanden ist; und
wenn das zuvor bestimmte Ziel in dem Vorschaubild vorhanden ist, Erhalten des ursprünglichen Remosaic-Farbblockbildes, das durch die Fixfokuskamera ausgegeben wird.

5. Verfahren nach einem der Ansprüche 1 bis 4, wobei die Vordergrundscharfzeichnung des ersten Bildes höher als die Vordergrundscharfzeichnung des zweiten Bildes ist und die Hintergrundscharfzeichnung des zweiten Bildes höher als die Hintergrundscharfzeichnung des ersten Bildes ist.

6. Verfahren nach einem der Ansprüche 1 bis 5, wobei das erste Bild ein Bild in voller Größe ist und die Auflösung des zweiten Bildes 1/4 der Auflösung des ersten Bildes ist.

7. Verfahren nach Anspruch 3 oder 4, wobei, wenn das erhaltene erste Bild und das erhaltene zweite Bild jeweils ein Einzelbild sind, das Durchführen der Bildverschmelzungsverarbeitung an dem Vordergrund des ersten Bildes und dem Hintergrund des zweiten Bildes, um ein fotografiertes Bild zu erhalten, umfasst: Erhalten des zuvor bestimmten Ziels durch Segmentieren des ersten Bildes und Verschmelzen, in eine Position des zuvor bestimmten Ziels in dem zweiten Bild, des zuvor bestimmten Ziels, das durch Segmentierung erhalten wird, um das fotografierte Bild zu erhalten.

8. Verfahren nach Anspruch 3 oder 4, wobei, wenn das erhaltene erste Bild und das erhaltene zweite Bild jeweils mindestens zwei Einzelbilder sind, das Durchführen der Bildverschmelzungsverarbeitung an dem Vordergrund des ersten Bildes und dem Hintergrund des zweiten Bildes, um ein fotografiertes Bild zu erhalten, umfasst:
Durchführen der Bildverschmelzungsverarbeitung an den mindestens zwei Einzelbildern von ersten Bildern, um ein drittes Bild zu erhalten, und Durchführen der Bildverschmelzungsverarbeitung an den mindestens zwei Einzelbildern von zweiten Bildern, um ein viertes Bild zu erhalten; und
Erhalten des zuvor bestimmten Ziels durch Segmentieren des dritten Bildes und Verschmelzen, in eine Position des zuvor bestimmten Ziels in dem vierten Bild, des zuvor bestimmten Ziels, das durch Segmentierung erhalten wird, um das fotografierte Bild zu erhalten.

9. Verfahren nach Anspruch 3 oder 4, wobei, wenn das erhaltene erste Bild ein Einzelbild ist und das erhaltene zweite Bild mindestens zwei Einzelbilder ist, das Durchführen der Bildverschmelzungsverarbeitung an dem Vordergrund des ersten Bildes und dem Hintergrund des zweiten Bildes, um das fotografierte Bild zu erhalten, umfasst:
Durchführen der Bildverschmelzungsverarbeitung an den mindestens zwei Einzelbildern von zweiten Bildern, um ein viertes Bild zu erhalten, Erhalten des zuvor bestimmten Ziels durch Segmentieren des ersten Bildes und Verschmelzen, in eine Position des zuvor bestimmten Ziels in dem vierten Bild, des zuvor bestimmten Ziels, das durch Segmentierung erhalten wird, um das fotografierte Bild zu erhalten; oder
wenn das erhaltene erste Bild mindestens zwei Einzelbilder ist und das erhaltene zweite Bild ein Einzelbild ist, das Durchführen der Bildverschmelzungsverarbeitung an dem Vordergrund des ersten Bildes und dem Hintergrund des zweiten Bildes, um das fotografierte Bild zu erhalten, umfasst:
Durchführen der Bildverschmelzungsverarbeitung an den mindestens zwei Einzelbildern der ersten Bilder, um ein drittes Bild zu erhalten, Erhalten des zuvor bestimmten Ziels durch Segmentieren des dritten Bildes und Verschmelzen, in eine Position des zuvor bestimmten Ziels in dem zweiten Bild, des zuvor bestimmten Ziels, das durch Segmentierung erhalten wird, um das fotografierte Bild zu erhalten.

10. Verfahren nach Anspruch 8 oder 9, wobei das dritte Bild und das vierte Bild Bilder mit hohem Dynamikumfang (HDR) sind.

11. Verfahren nach einem der Ansprüche 1 bis 10, wobei das Verfahren vor dem Durchführen der Bildverschmelzungsverarbeitung an dem Vordergrund des ersten Bildes und dem Hintergrund des zweiten Bildes umfasst:
Erweitern einer Größe des zweiten Bildes auf eine Größe des ersten Bildes basierend auf der Auflösung des ersten Bildes und der Auflösung des zweiten Bildes.

12. Endgerät (13), das einen Speicher (1301, 1420), einen Prozessor (1300, 1480) und ein Computerprogramm (1302), das in dem Speicher (1301, 1420) gespeichert ist und auf dem Prozessor (1300, 1480) laufen gelassen werden kann, umfasst, wobei das Endgerät (13), wenn der Prozessor (1300, 1480) das Computerprogramm (1302) ausführt, aktiviert wird, um das Fotografierverfahren nach einem der Ansprüche 1 bis 11 zu implementieren.

13. Computerlesbares Speicherungsmedium, wobei das computerlesbare Speicherungsmedium ein Computerprogramm (1302) speichert, und wenn das Computerprogramm (1302) durch einen Computer ausgeführt wird, der Computer aktiviert wird, um das Fotografierverfahren nach einem der Ansprüche 1 bis 11 zu implementieren.

14. Computerprogrammprodukt, wobei, wenn das Computerprogrammprodukt auf einer Computervorrichtung laufen gelassen wird, die Computervorrichtung aktiviert wird, um das Verfahren nach einem der Ansprüche 1 bis 11 durchzuführen.

## Revendications

1. Procédé de photographie, comprenant :
l'obtention d'une première image et d'une deuxième image produites par un appareil-photo à foyer fixe, dans lequel la distance de mise au point de l'appareil-photo à foyer fixe est inférieure à une distance prédéfinie, la résolution de la première image est N fois la résolution de la deuxième image, N est un nombre entier supérieur à 1, et la première image et la deuxième image comprennent une même scène de photographie, dans lequel la deuxième image est obtenue dans un mode de compartimentage ; et
la réalisation d'un traitement de fusion d'images sur l'avant-plan de la première image et l'arrière-plan de la deuxième image pour obtenir une image photographiée, dans lequel l'avant-plan de la première image comporte une cible prédéterminée située dans une profondeur de champ de l'appareil-photo à foyer fixe.

2. Procédé de photographie selon la revendication 1, l'obtention d'une première image et d'une deuxième image produites par un appareil-photo à foyer fixe comprend :
l'obtention d'une image originale de bloc de couleur de re-mosaïquage produite par l'appareil-photo à foyer fixe ; et
l'obtention de la première image et de la deuxième image sur la base de l'image originale de bloc de couleur de re-mosaïquage.

3. Procédé selon la revendication 1, dans lequel l'obtention d'une première image et d'une deuxième image produites par un appareil-photo à foyer fixe comprend :
l'obtention d'une image de prévisualisation produite par l'appareil-photo à foyer fixe, et le fait de détecter si la cible prédéterminée existe dans l'image de prévisualisation ; et
lorsque la cible prédéterminée existe dans l'image de prévisualisation, l'obtention de la première image et de la deuxième image produites par l'appareil-photo à foyer fixe.

4. Procédé selon la revendication 2, dans lequel l'obtention d'une image originale de bloc de couleur de re-mosaïquage produite par un appareil-photo à foyer fixe comprend :
l'obtention d'une image de prévisualisation produite par l'appareil-photo à foyer fixe, et le fait de détecter si la cible prédéterminée existe dans l'image de prévisualisation ; et
lorsque la cible prédéterminée existe dans l'image de prévisualisation, l'obtention de l'image originale de bloc de couleur de re-mosaïquage produite par l'appareil-photo à foyer fixe.

5. Procédé selon l'une quelconque des revendications 1 à 4, dans lequel la définition de l'avant-plan de la première image est plus élevée que la définition de l'avant-plan de la deuxième image, et la définition de l'arrière-plan de la deuxième image est plus élevée que la définition de l'arrière-plan de la première image.

6. Procédé selon l'une quelconque des revendications 1 à 5, dans lequel la première image est une image pleine grandeur, et la résolution de la deuxième image est 1/4 de la résolution de la première image.

7. Procédé selon la revendication 3 ou 4, dans lequel, lorsque la première image obtenue et la deuxième image obtenue sont chacune un cliché, le traitement de fusion d'images sur l'avant-plan de la première image et l'arrière-plan de la deuxième image pour obtenir une image photographiée comprend :
l'obtention de la cible prédéterminée en segmentant la première image, et la fusion, dans un emplacement de la cible prédéterminée dans la deuxième image, la cible prédéterminée obtenue par segmentation, pour obtenir l'image photographiée.

8. Procédé selon la revendication 3 ou 4, dans lequel, lorsque la première image obtenue et la deuxième image obtenue sont chacune au moins deux clichés, le traitement de fusion d'images sur l'avant-plan de la première image et l'arrière-plan de la deuxième image pour obtenir une image photographiée comprend :
la réalisation d'un traitement de fusion d'images sur les au moins deux clichés des premières images pour obtenir une troisième image, et la réalisation du traitement de fusion d'images sur les au moins deux clichés des deuxièmes images pour obtenir une quatrième image ; et
l'obtention de la cible prédéterminée en segmentant la troisième image, et la fusion, dans un emplacement de la cible prédéterminée dans la quatrième image, de la cible prédéterminée obtenue par segmentation, pour obtenir l'image photographiée.

9. Procédé selon la revendication 3 ou 4, dans lequel, lorsque la première image obtenue est un cliché, et que la deuxième image obtenue est au moins deux clichés, le traitement de fusion d'images sur l'avant-plan de la première image et l'arrière-plan de la deuxième image pour obtenir une image photographiée comprend :
la réalisation du traitement de fusion d'images sur les au moins deux clichés des deuxièmes images pour obtenir une quatrième image, l'obtention de la cible prédéterminée en segmentant la première image, et la fusion, dans un emplacement de la cible prédéterminée dans la quatrième image, de la cible prédéterminée obtenue par segmentation, pour obtenir l'image photographiée ; ou
lorsque la première image obtenue est au moins deux clichés, et que la deuxième image obtenue est un cliché, le traitement de fusion d'images sur l'avant-plan de la première image et l'arrière-plan de la deuxième image pour obtenir une image photographiée comprend :
la réalisation du traitement de fusion d'images sur les au moins deux clichés des premières images pour obtenir une troisième image, l'obtention de la cible prédéterminée en segmentant la troisième image, et la fusion, dans un emplacement de la cible prédéterminée dans la deuxième image, de la cible prédéterminée obtenue par segmentation, pour obtenir l'image photographiée.

10. Procédé selon la revendication 8 ou 9, dans lequel la troisième image et la quatrième image sont des images à grande gamme dynamique, HDR.

11. Procédé selon l'une quelconque des revendications 1 à 10, dans lequel avant la réalisation du traitement de fusion d'images sur l'avant-plan de la première image et l'arrière-plan de la deuxième image, le procédé comprend :
l'agrandissement d'une taille de la deuxième image par rapport à une taille de la première image sur la base de la résolution de la première image et de la résolution de la deuxième image.

12. Dispositif terminal (13), comprenant une mémoire (1301, 1420), un processeur (1300, 1480), et un programme informatique (1302) qui est stocké dans la mémoire (1301, 1420) et qui peut être exécuté sur le processeur (1300, 1480), dans lequel lorsque le processeur (1300, 1480) exécute le programme informatique (1302), le dispositif terminal (13) est en mesure de mettre en œuvre le procédé de photographie selon l'une quelconque des revendications 1 à 11.

13. Support de stockage lisible par ordinateur, dans lequel le support de stockage lisible par ordinateur stocke un programme informatique (1302), et lorsque le programme informatique (1302) est exécuté par un ordinateur, l'ordinateur est en mesure de mettre en œuvre le procédé de photographie selon l'une quelconque des revendications 1 à 11.

14. Produit-programme informatique, dans lequel, lorsque le produit-programme informatique s'exécute sur un dispositif informatique, le dispositif informatique est en mesure de réaliser le procédé selon l'une quelconque des revendications 1 à 11.
